# EUROPÄISCHE PATENTSCHRIFT

(11) **EP 2 247 400 B1**
(45) Veröffentlichungstag und Bekanntmachung des Hinweises auf die Patenterteilung: **24.04.2019**
(21) Anmeldenummer: 09706443.0
(22) Anmeldetag: 30.01.2009
(51) Int. Cl.: B23D 25/12

(54) **TROMMELSCHERENANORDNUNG**
DRUM SHEAR ARRANGEMENT
SYSTÈME DE CISAILLE À TAMBOUR

(30) Priorität: 31.01.2008 DE 102008006878
(43) Veröffentlichungstag der Anmeldung: 10.11.2010
(73) Patentinhaber: SMS group GmbH, 40237 Düsseldorf (DE)
(72) Erfinder: BEUTER, Matthias, 57319 Bad Berleburg (DE); EHLS, Bernhard, 57271 Hilchenbach (DE)
(74) Vertreter: Klüppel, Walter
(86) Internationale Anmeldenummer: PCT/EP2009/000625
(87) Internationale Veröffentlichungsnummer: WO 2009/095260

(56) Entgegenhaltungen:
- EP-A- 0 162 020
- WO-A-2004/054730
- DE-A1- 2 330 407
- DE-A1- 2 622 558
- FR-A- 2 504 040
- JP-A- 52 140 084
- JP-U- 52 008 281
- US-A- 3 396 617

## Beschreibung

### Technisches Gebiet

Die Erfindung betrifft eine Trommelscherenanordnung, insbesondere zum Schneiden von Blechen und/oder zum Durchleiten von Brammen, nach dem Oberbegriff von Anspruch 1. Eine solche Trommelscherenanordnung ist beispielsweise aus der JP 52 140084 A bekannt.

### Stand der Technik

Trommelscherenanordnungen sind im Stand der Technik bekannt, bei welchen zwei Trommel mit Schneiden von Blechen oder Bändern verwendet werden, welche beabstandet zueinander angeordnet sind und sich gegensinnig drehen, wobei an beiden Trommeln jeweils Messer bzw. Schneiden angeordnet sind, welche ein durchlaufendes Blech schneiden, wenn die Messer der beiden Trommeln sich aneinander annähern und sich gegenüberstehen. Dabei schneiden solche Trommelscherenanordnungen Blechbänder. Auch ist bekannt, dass solche Trommelscherenanordnungen im Bereich der Trommeln Abflachungen aufweisen, die wenn sie sich gegenüberstehen, dazu geeignet sind, dicke Bleche durch die Trommelschere passieren zu lassen, ohne dass sie geschnitten werden. Eine solche Trommelscherenanordnungen ist durch die EP 0162 020 A1 bekannt geworden.

Bei solchen Trommelscherenanordnungen ist es bekannt, dass Bänder mit einer Dicke von 20 bis 40 mm zum Schopfen durch die Trommelscherenanordnung ein- und durchgeleitet werden.

Probleme treten jedoch bei dünnen Bändern mit einer Dicke mit bis zu 4 mm auf, wenn diese in der Trommelscherenanordnung geteilt werden müssen und auch dicke Brammen von bis zu 150 mm durch die Trommelscherenanordnung ohne diese zu schneiden durchgeleitet werden müssen.

Bei den dünnen Blechen oder Bändern muss gewährleistet werden, dass die Bänder beim Einlaufen in die Trommelscherenanordnung und nach dem Teilschnitt sicher wieder auf die nächste Rollgangsrolle geführt wird und nicht in der Trommelscherenanordnung abtaucht. Bei den dicken Brammen ist vorteilhaft, dass ein freier Durchgang zwischen den Trommeln der Trommelscherenanordnung zwischen der oberen Messertrommel und der unteren Messertrommel erreicht werden kann.

### Darstellung der Erfindung, Aufgabe, Lösung, Vorteile

Es ist die Aufgabe der vorliegenden Erfindung, eine Trommelscherenanordnung zu schaffen, bei welcher die Bänder beim Einlaufen in die Trommelscherenanordnung und nach dem Teilschnitt sicher wieder auf die nächste Rollgangsrolle geführt wird und nicht in der Trommelscherenanordnung abtaucht.

Erfindungsgemäß wird die Aufgabe mit den Merkmalen von Anspruch 1 erreicht. Durch die Einfahrbarkeit des zumindest einen Gruppenrollgangs kann vorteilhaft erreicht werden, dass das Blech oder Band sicher eingeführt und ausgeführt erden kann, wobei der zumindest eine Gruppenrollgang zumindest teilweise wieder ausfahrbar ist, um bei der Drehung der Trommeln nicht zu stören.

Es ist vorteilhaft, wenn jeweils eingangsseitig und ausgangsseitig ein Gruppenrollgang ein- und wieder ausfahrbar ist.

Dabei ist der zumindest eine erste Gruppenrollgang mittels eines Antriebs horizontal verschiebbar ausgestaltet. Durch den Antrieb, welcher hydraulisch oder elektrisch bzw. elektromotorisch ausgebildet sein kann, kann eine den Anforderungen entsprechende Steuerung der horizontalen Stellung des Gruppenrollgangs erfolgen.

Der zumindest eine erste Gruppenrollgang ist mittels eines Antriebs vertikal verstellbar ausgestaltet. So kann die Einstellung der Höhe des Gruppenrollgangs gezielt gesteuert werden, was für das ein- bzw. Ausführen eines Blechbandes vorteilhaft ist, weil die diesbezügliche Höhe das Weiterleiten auf den nächsten Gruppenrollgang erleichtert und ein Verklemmen oder Abtauchen verhindert. Weiterhin ist es zweckmäßig, wenn neben dem zumindest einen ersten Gruppenrollgang zumindest ein zweiter Gruppenrollgang vorgesehen ist, welcher um eine Achse verschwenkbar gestaltet und angeordnet ist. So kann vorteilhaft erreicht werden, dass der zumindest eine zweite Gruppenrollgang mittels eines Antriebs um eine Achse verschwenkbar ausgestaltet ist. Dadurch kann der zweite Gruppenrollgang in den Rollgang geschwenkt werden, wenn er benötigt wird oder er kann vorteilhaft abgesenkt werden, wenn er nicht benötigt wird. Besonders zweckmäßig ist es, wenn die zumindest eine Trommel oder die beiden Trommeln auf der dem Messer gegenüberliegenden Seite eine abgeflachte Kontur aufweist oder aufweisen und/oder eine Aussparung aufweist oder aufweisen.

Dabei ist es vorteilhaft, wenn die Aussparung eine Abflachung aufweist, die beiderseits jeweils einen einen Winkel mit der Abflachung bildenden Abschnitt aufweist. Somit sind die Abschnitte Erweiterungen der Abflachung, die in einem Winkel zur Abflachung stehen.

Weiterhin ist es zweckmäßig, wenn zumindest die untere Trommel auf zumindest einer Seite des Messers am Umfang eine Kontur aufweist, an welcher sich ein Blech oder Band abstützt. Diese Kontur ist vorteilhaft so gestaltet, dass sie der beabsichtigten Bahn des Blechs bis zur nächsten Rolle oder zum nächsten Gruppenrollgang entspricht oder bewirkt, dass das Blech diese Bahn einnimmt.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine schematische Darstellung einer Trommelscherenanordnung,
- Fig. 2: eine schematische Darstellung einer Trommelscherenanordnung,
- Fig. 3: eine schematische Darstellung einer Trommelscherenanordnung,
- Fig. 4: eine schematische Darstellung einer Trommelscherenanordnung, und
- Fig. 5: eine schematische Darstellung einer Trommelscherenanordnung.

### Bevorzugte Ausführung der Erfindung

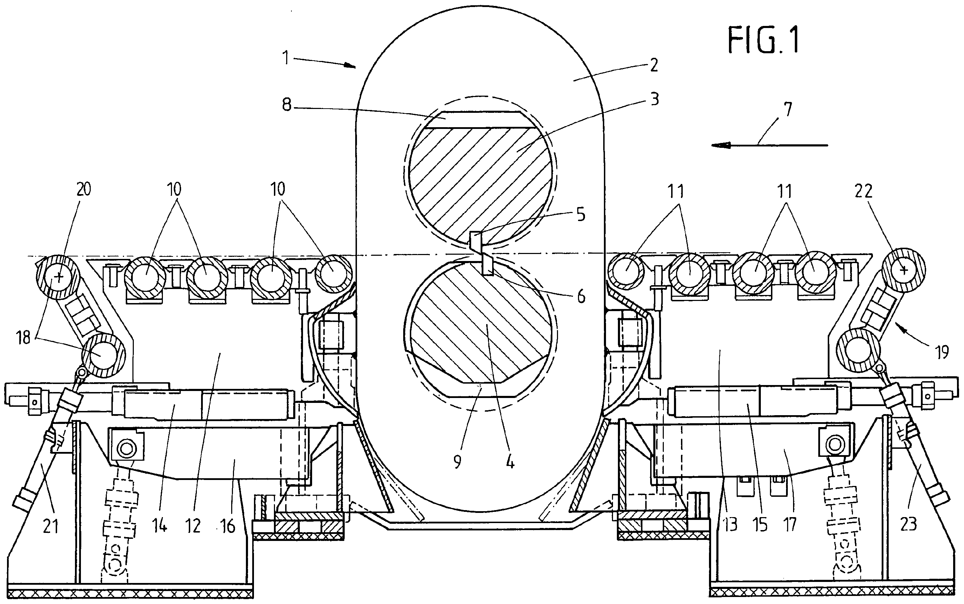

Die Figuren 1 bis 5 zeigen ein Ausführungsbeispiel der erfindungsgemäßen Trommelscherenanordnung 1 in verschiedenen Betriebszuständen.

Die Figur 1 zeigt schematisch eine Trommelscherenanordnung 1, bei welcher in einem Gestell 2 zwei Trommeln 3,4 koaxial angeordnet sind, welche drehantreibbar sind. Der Drehantrieb der Trommeln 3,4 ist bekannt und weiterhin hier nicht detailliert ausgeführt. Die Trommeln 3,4 weisen jeweils ein Messer 5,6 auf, mittels welchen beispielsweise ein durchlaufendes Blech geschnitten werden kann. Das Blech läuft dabei gemäß Pfeil 7 durch die Trommelscherenanordnung 1. Die Trommeln 3,4 sind im Querschnitt nicht rund ausgebildet, sondern weisen Abflachungen 8 bzw. Aussparungen 9 auf. Die obere Schneidtrommel 3 weist auf der dem Messer 5 gegenüberliegenden Seite der Trommel 3 eine Abflachung 8 auf, die etwa ein Drittel des Radius der Trommel in der Höhe beträgt. Die Kontur der Abflachung ist senkrecht zum Radius der Trommel ausgerichtet und stellt einen Kreisabschnitt dar. Die untere Trommel 4 weist eine dem Messer 6 gegenüberliegende Aussparung 9 auf, die in der Mitte eine Abflachung darstellt und zu den Seiten hin eine abgewinkelte Kontur aufweist.

Vor und/oder hinter dem Trommelgestell 2 sind Gruppenrollgänge 10,11 vorgesehen, welche vorzugsweise mittels eines gemeinsamen Rahmens 12,13 versehen sind und mittels des Rahmens verlagerbar sind. Dabei kann der Rahmen mit dem Gruppenrollengang 10,11 vorzugsweise in Richtung parallel oder antiparallel zu der Bandförderrichtung 7 verlagert werden. Dazu ist der Rahmen 12,13 als Schlitten horizontal verschiebbar ausgebildet, wobei ein dazu vorgesehener Antrieb 14,15 ggf. mit Verteilergetriebe als Antrieb für die horizontale Verschiebung zur Verfügung steht. Darüber hinaus ist der Schlitten bzw. Rahmen 12,13 auf einem drehbar gelagerten Rahmen 16,17 angeordnet, wodurch die Höhenlage des Schlittens und damit des Rollgangs 10,11 relativ zu der Höhe der Trommeln einstellbar gestaltet ist.

Weiterhin ist auf der Figur 1 sowohl vor und vorteilhaft optional auch hinter dem Gestell 2 zumindest ein zweiter Gruppenrollgang 18,19 vorgesehen, welcher jeweils verkippbar ausgestaltet ist. Dabei kann je nach Ausführungsbeispiel auch nur ein zweiter Gruppenrollgang 18,19 vor oder nach dem Gestell 2 angeordnet sein. Der Gruppenrollgang 18 ist um eine Achse 20 verschwenkbar und mittels eines Antriebes 21 verschwenkbar. Vorteilhaft ist es, wenn der Antrieb 21 ein elektrischer bzw. elektromotorischer oder hydraulischer Antrieb ist. Der Gruppenrollgang 19 ist in Figur 1 um eine Achse 22 verschwenkbar und mittels eines Antriebes 23 verschwenkbar. Vorteilhaft ist es, wenn der Antrieb 23 ein elektrischer bzw. elektromotorischer oder hydraulischer Antrieb ist.

In der Figur 1 sind die Gruppenrollgänge 10,11 jeweils außerhalb des Gestells 2 und diesem benachbart angeordnet und die Gruppenrollgänge 18,19 sind jeweils nach unten verschwenkt angeordnet.

Die Figur 1 zeigt eine Konfiguration einer erfindungsgemäße Trommelscherenanordnung 1, die zum Schopfen dünner Bänder in Zuführrichtung 7 eingestellt ist. Durch die Anordnung der Gruppenrollgänge 10,11 außerhalb der Schere bzw. des Gestells 2 und der Absenkung der Gruppenrollgänge können die geschopften Schrottstücke nach dem Schnitt zu einer Schrottrutsche geleitet werden.

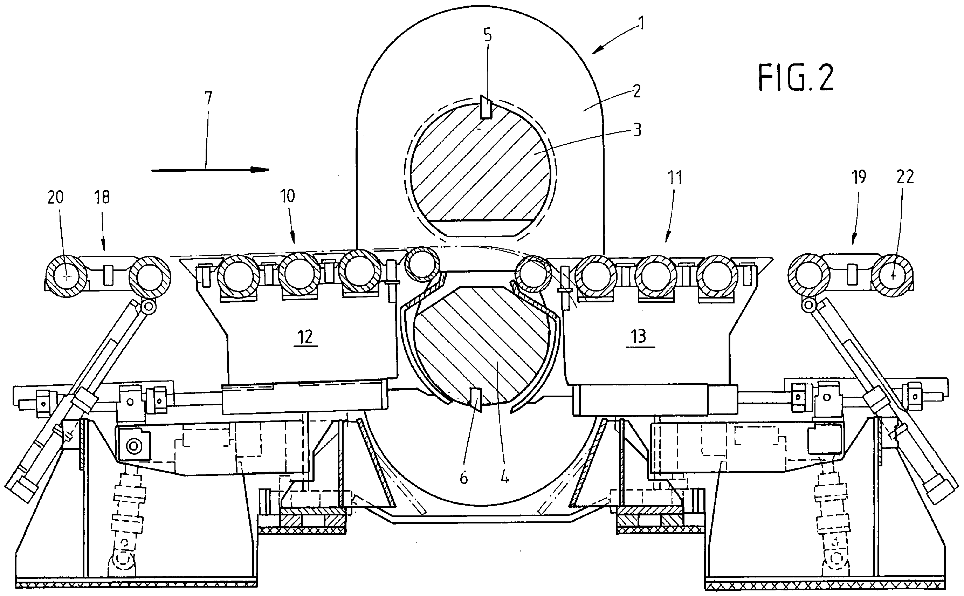

Die Figur 2 zeigt die erfindungsgemäße Trommelscherenanordnung 1, die zum Einlaufen eines dünnen Bandes oder Bleches eingestellt ist. Die Trommeln 3,4 sind derart eingestellt, dass die Schneiden 5,6 etwa an ihrem obersten bzw. untersten Punkt angeordnet sind. Die Gruppenrollgänge 10 und 11 sind durch Horizontalverschiebung des Schlittens 12,13 jeweils in den Bereich des Gestells 2 horizontal verschoben. Weiterhin ist der Gruppenrollgang 10 etwas erhöht und etwas schräg gestellt, wobei der Gruppenrollgang 11 horizontal eingestellt ist.

Wie zu erkennen ist, sind die Gruppenrollgänge 18 und 19 um ihre Drehachse 20,22 nach oben verschwenkt und verlängern quasi den Rollgang der Gruppenrollgänge 10 bzw. 11. Durch den zwischen den Trommeln 3,4 entstehenden Spalt kann ein Band bzw. Blech in die Trommelscherenanordnung 1 eingefahren werden. Auch dient der Abstand zwischen den Trommeln 3,4 in dieser Einstellung dem Durchleiten von Brammen durch die Trommelscherenanordnung.

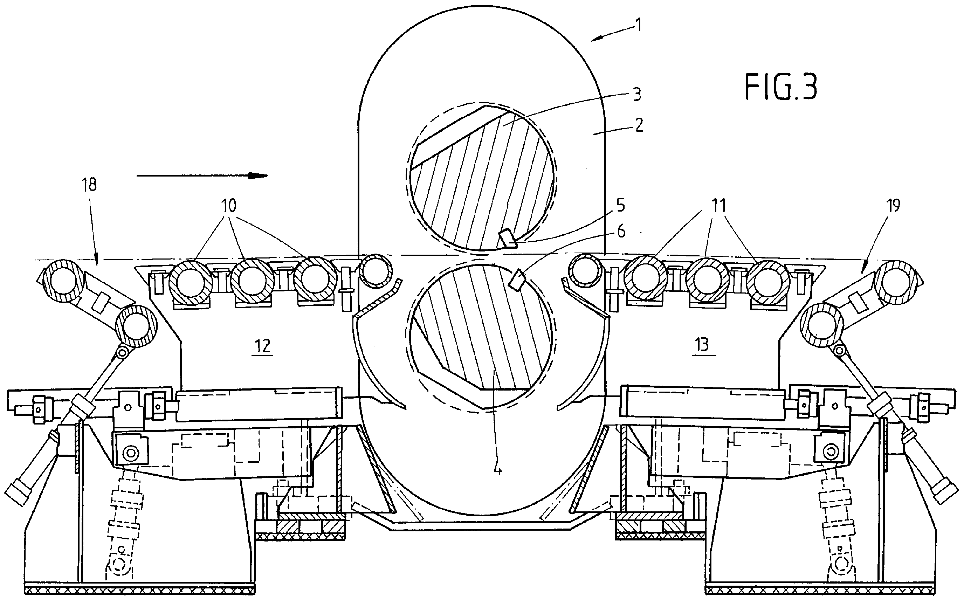

Die Figur 3 zeigt die erfindungsgemäße Trommelscherenanordnung 1, die im Zustand der Beschleunigung zum Schnitt eines dünnen Bandes oder Bleches dargestellt ist. Die Trommeln 3,4 sind derart dargestellt, dass die Messer 5,6 nahe ihrem unteren bzw. oberen Punkt angeordnet sind und sich die Messer 5,6 bereits relativ nahe sind, so dass unmittelbar ein Schnitt erfolgen kann. Die Gruppenrollgänge 10 und 11 sind durch Horizontalverschiebung des Schlittens 12,13 jeweils in den Bereich des Gestells 2 horizontal verschoben, wobei sie allerdings nicht so weit eingeschoben sind wie in Figur 2 dargestellt. Somit werden die Gruppenrollgänge 10,11 ausgehend von dem Zustand der Figur 2 zu dem Zustand der Figur 3 wieder etwas aus dem Gestell 2 herausgefahren. Gleichzeitig sind sie in ihrer Höhe angehoben, um vorteilhaft damit die Messer 5,6 an den Gruppenrollgängen vorbeizulassen. Allerdings sind die Gruppenrollgänge 18 und 19 wieder um ihre Drehachse nach unten verschwenkt und damit abgesenkt.

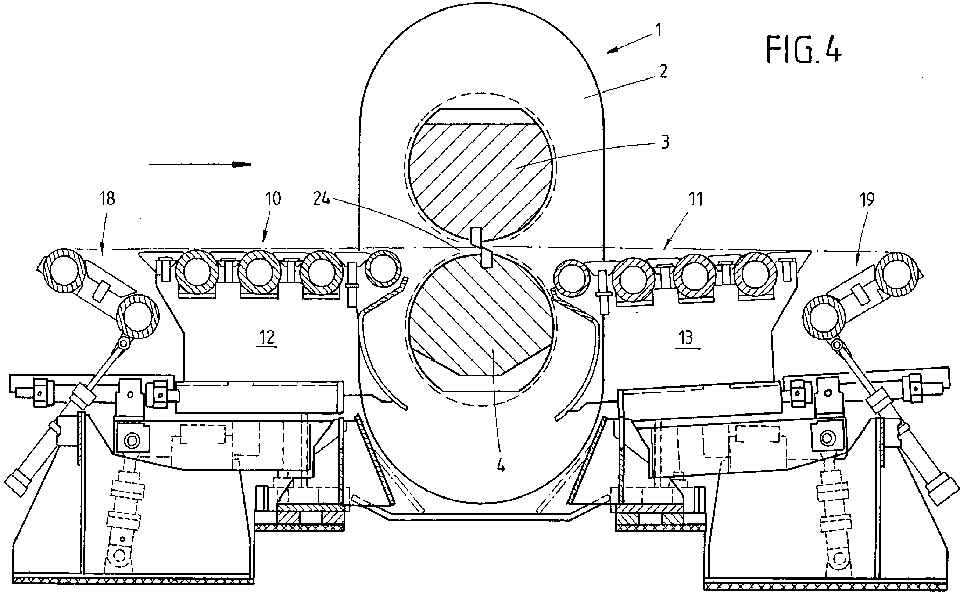

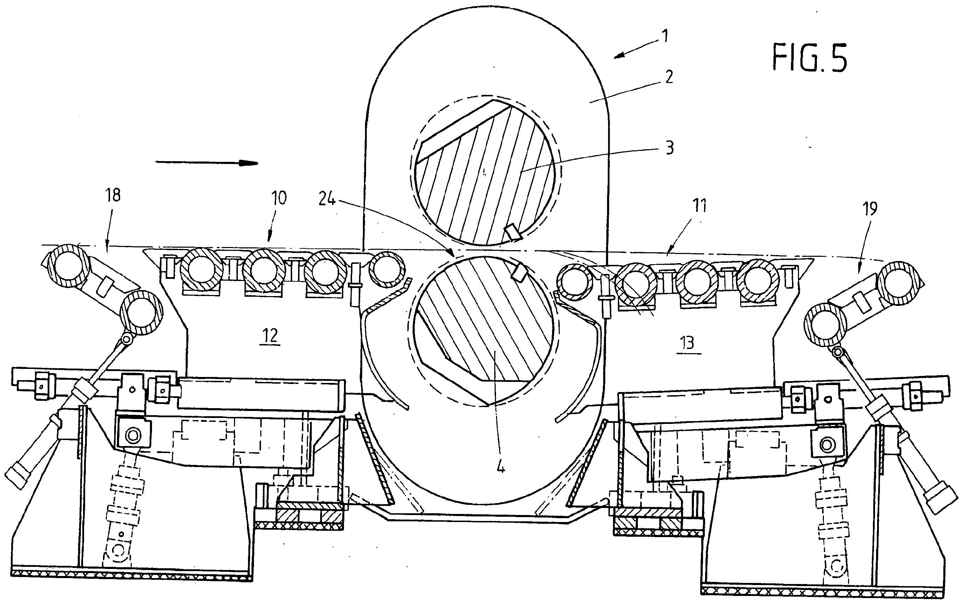

Die Figuren 4 und 5 zeigen die erfindungsgemäße Trommelscherenanordnung 1 jeweils in einem Zustand des Schnittes bzw. im Zustand der Überleitung des Bandes nach dem Schnitt. Zum Schnitt und zur Überleitung wird der Gruppenrollgang 10 im Einlauf auf die Rollgangshöhe eingestellt und der Gruppenrollgang 11 am Auslauf wird zumindest etwas abgesenkt. Die Kontur 24 der unteren Trommel 4 dient der Stützung des geschnittenen Bandes, an welcher sich das Band beim Transport aus der Trommelscherenanordnung abstützt, so dass das Band auf den nächsten Gruppenrollgang 11 nach der Schere gelangen kann.

### Bezugszeichenliste

- 1: Trommelscherenanordnung
- 2: Gestell
- 3: Trommel
- 4: Trommel
- 5: Messer, Schneide
- 6: Messer, Schneide
- 7: Pfeil, Laufrichtung
- 8: Abflachung
- 9: Aussparung
- 10: Gruppenrollgang
- 11: Gruppenrollgang
- 12: Rahmen
- 13: Rahmen
- 14: Antrieb
- 15: Antrieb
- 16: Rahmen
- 17: Rahmen
- 18: Gruppenrollgang
- 19: Gruppenrollgang
- 20: Achse
- 21: Antrieb
- 22: Achse
- 23: Antrieb
- 24: Kontur

## Patentansprüche

1. Trommelscherenanordnung (1) mit einem Trommelgestell (2) und mit zwei in dem Trommelgestell (2) beabstandet zueinander angeordneten und drehantreibbaren Trommeln (3, 4), welche jeweils an ihrer Kontur ein Messer (5, 6) aufweisen, wobei bei Durchlauf eines Blechs in einem Spalt zwischen den Trommeln (3, 4) unter zumindest teilweiser Drehung der Trommeln das Blech schneidbar ist, wobei eingangs- und/oder ausgangsseitig des Trommelgestells zumindest ein erster Gruppenrollgang (10, 11) vorgesehen ist, welcher in den Bereich des Trommelgestells einfahrbar ist,
**dadurch gekennzeichnet,**
**dass** der zumindest eine erste Gruppenrollgang (10, 11) mittels eines Antriebs (12, 14, 13, 15) horizontal verschiebbar ausgestaltet ist, dass der zumindest eine erste Gruppenrollgang (10, 11) mittels eines Antriebs vertikal verstellbar ausgestaltet ist und dass zumindest ein zweiter Gruppenrollgang (18, 19) vorgesehen ist, welcher um eine Achse (20, 22) verschwenkbar gestaltet ist.

2. Trommelscherenanordnung (1) nach Anspruch 1,
**dadurch gekennzeichnet, dass**
die zumindest eine Trommel (3, 4) oder die Trommeln (3, 4) auf der dem Messer (5, 6) gegenüberliegenden Seite eine abgeflachte Kontur (8) aufweisen und/oder eine Aussparung (9) aufweisen.

3. Trommelscherenanordnung (1) nach Anspruch 2,
**dadurch gekennzeichnet, dass**
die Aussparung (9) eine Abflachung aufweist, die beiderseits jeweils einen Winkel mit der Abflachung bildenden Abschnitt aufweist.

4. Trommelscherenanordnung (1) nach zumindest einem der vorhergehenden Ansprüche,
**dadurch gekennzeichnet, dass**
zumindest die untere Trommel (4) auf zumindest einer Seite des Messers (6) am Umfang eine Kontur (24) aufweist, an welcher sich ein Blech oder Band abstützt.

## Claims

1. Drum cutting arrangement (1) with a drum frame (2) and with two rotationally drivable drums (3, 4) arranged in the drum frame (2) at a spacing from one another and each having at the contour thereof a knife (5, 6), wherein when a metal sheet runs through a gap between the drums (3, 4) the metal sheet can be cut under at least partial rotation of the drums, and wherein at least one first group roller path (10, 11), which is movable into the region of the drum frame, is provided at the inlet side and/or outlet side of the drum frame, **characterised in that** the at least one group roller path (10, 11) is configured to be horizontally displaceable by means of a drive (12, 14, 13, 15), that the at least one first group roller path (10, 11) is configured to be vertically adjustable by means of a drive and that at least one second group roller path (18, 19) designed to be pivotable about an axis (20, 22) is provided.

2. Drum cutting arrangement (1) according to claim 1, **characterised in that** the at least one drum (3, 4) or the drums (3, 4) has or have on the side opposite the knife (5, 6) a flattened contour (8) and/or a cut-out (9).

3. Drum cutting arrangement (1) according to claim 2, **characterised in that** the cut-out (9) has a flattening which has on each side a respective section forming an angle with the flattening.

4. Drum cutting arrangement (1) according to at least one of the preceding claims, **characterised in that** at least the lower drum (4) has on at least one side of the knife (6) at the circumference a contour (24) at which a metal sheet or a strip is supported.

## Revendications

1. Agencement de cisailles à tambours (1) comprenant un bâti de tambour (2) et deux tambours (3, 4) aptes à être entraînés en rotation et disposés à l'écart l'un de l'autre dans le bâti de tambour (2), qui présentent respectivement contre leur contour, une lame (5, 6) ; dans lequel lors du passage d'une tôle dans une fente ménagée entre les tambours (3, 4), la tôle peut être découpée dans des conditions de rotation au moins partielle des tambours ; dans lequel, du côté entrée et/ou du côté sortie du bâti de tambour, on prévoit au moins un train de rouleaux (10, 11) constituant un premier groupe qui peut s'introduire dans la zone du bâti de tambour, **caractérisé en ce que** ledit au moins un train de rouleaux (10, 11) constituant un premier groupe est réalisé pour pouvoir se déplacer à l'horizontale au moyen d'une commande (12, 14, 13, 15) ; **en ce que** ledit au moins un train de rouleaux (10, 11) constituant un premier groupe est réalisé pour pouvoir se déplacer à la verticale au moyen d'une commande; et **en ce que** l'on prévoit moins un train de rouleaux (20, 22) constituant un deuxième groupe qui est réalisé pour pouvoir pivoter autour d'un axe (20, 22).

2. Agencement de cisailles à tambours (1) selon la revendication 1, **caractérisé en ce que** ledit au moins un tambour (3, 4) ou bien les tambours (3, 4) sur les côtés opposés à la lame (5, 6) présentent un contour aplati (8) et/ou présentent un évidement (9).

3. Agencement de cisailles à tambours (1) selon la revendication 2, **caractérisé en ce que** l'évidement (9) représente un aplatissement qui forme de part et d'autre respectivement un angle avec le tronçon formant l'aplatissement.

4. Agencement de cisailles à tambours (1) selon au moins une des revendications précédentes, **caractérisé en ce qu'**au moins le tambour inférieur (4) présente, sur au moins un côté de la lame (6), sur la périphérie, un contour (24) contre lequel vient s'appuyer une tôle ou une bande.
